# FASCICULE DE BREVET EUROPEEN

(11) **EP 0 751 037 B1**
(45) Date de publication et mention de la délivrance du brevet: **09.12.1998**
(21) Numéro de dépôt: 96401380.9
(22) Date de dépôt: 21.06.1996
(51) Int. Cl.: B60N 2/46, B60N 2/02

(54) **Accoudoir rabattable pour siège de véhicule**
Umklappbare Armlehne für Fahrzeugsitze
Tiltable armrest for vehicle seats

(30) Priorité: 26.06.1995 FR 9507655
(43) Date de publication de la demande: 02.01.1997
(73) Titulaire: BERTRAND FAURE EQUIPEMENTS S.A., 92100 Boulogne (FR)
(72) Inventeur: Bernard, Vincent, 88650 Anould (FR); Sabourin, Laurent, 88110 Raon l'Etape (FR)
(74) Mandataire: Burbaud, Eric

(56) Documents cités:
- EP-A- 0 063 969
- EP-A- 0 604 375
- EP-A- 0 670 241
- EP-A- 0 713 800
- DE-A- 2 951 052
- DE-A- 3 505 399
- DE-A- 3 539 258
- DE-A- 3 937 678
- DE-C- 3 544 491
- GB-A- 2 194 305

## Description

La présente invention concerne les accoudoirs rabattables, et les sièges équipés de tels accoudoirs.

Plus particulièrement, l'invention est relative aux accoudoirs destinés à être montés pivotants entre une position relevée et une position rabattue sur des sièges de véhicule, notamment sur des sièges arrières de véhicules automobiles.

En général, un accoudoir de ce type est réalisé sous la forme d'un bloc de mousse recouvert d'un revêtement et présentant une épaisseur sensiblement égale à l'épaisseur de la matelassure du dossier du siège, de façon que ledit accoudoir, lorsqu'il est en position relevée, puisse s'intégrer dans le dossier.

Par ailleurs, l'accoudoir s'appuie habituellement sur l'assise du siège lorsqu'il est rabattu. Par conséquent, compte tenu de l'épaisseur assez faible de la matelassure du dossier, donc de l'épaisseur également assez faible de l'accoudoir, celui-ci est relativement bas lorsqu'il est rabattu, de sorte qu'il ne fournit pas un appui confortable pour les coudes des passagers.

De plus, chaque passager est généralement assis entre l'accoudoir rabattable et un accoudoir de porte qui est habituellement disposé plus haut que l'accoudoir rabattable, ce qui accroît encore l'inconfort du passager.

Pour remédier à ces inconvénients, il est connu de monter l'accoudoir sur l'armature du siège au moyen d'un mécanisme à biellette qui relève l'accoudoir lorsqu'il est rabattu. Dans ce cas, l'accoudoir se trouve monté en console sur l'armature du siège, de sorte qu'il ne s'appuie pas sur l'assise du siège lorsqu'il est rabattu.

Toutefois, ce montage est complexe et coûteux, d'autant plus que l'embiellage doit être particulièrement résistant pour supporter les couples importants qui peuvent être engendrés par l'appui du coude de l'avant-bras d'un passager vers l'extrémité libre de l'accoudoir.

Par ailleurs, le document EP-0 604 375 décrit un accoudoir correspondant au préambule de la revendication 1, qui est monté en console sur le dossier du siège, sans mécanisme à biellette.

Mais cet accoudoir présente une solidité insuffisante, précisément du fait de l'absence de biellette de renforcement.

D'autre part, le document GB-A-2 194 305 décrit un accoudoir non pivotant doté d'un mécanisme de rehausse.

Enfin, un accoudoir comportant deux bras pivotant l'un par rapport à l'autre ainsi que relativement au dossier d'un siège de véhicule automobile est connu de EP-A-0 713 800, qui a été publié le 29.05.96 et n'est compris dans l'état de la technique qu'au sens de l'article 54(3) CBE.

La présente invention a pour but de réaliser un accoudoir simple, résistant et peu coûteux qui, lorsqu'il est rabattu, puisse être positionné à une hauteur confortable pour un utilisateur du véhicule.

A cet effet, un accoudoir du genre de celui décrit dans le document EP-0 604 375 est caractérisé en ce qu'il comporte en outre d'une part un deuxième bras qui s'étend entre une extrémité arrière et une extrémité avant, l'extrémité arrière du deuxième bras comportant un axe de rotation horizontal qui est parallèle à l'axe de rotation du premier bras et qui est adapté pour être monté dans une position fixe par rapport au siège, les deux axes de rotation étant disposés sensiblement l'un au-dessus de l'autre, et les deux bras étant reliés l'un à l'autre par une liaison coulissante vers leurs extrémités avant pour permettre un déplacement longitudinal relatif entre les deux bras lors du pivotement de l'accoudoir, les deux axes de rotation et la liaison coulissante constituant un mécanisme de rehausse qui est commandé par le pivotement de l'accoudoir lorsque cet accoudoir est monté sur le siège, ce mécanisme de rehausse étant adapté pour écarter les deux bras l'un de l'autre en rehaussant l'extrémité arrière du deuxième bras par rapport au premier bras lorsque l'accoudoir est monté sur le siège et est en position rabattue, et pour rapprocher les deux bras l'un de l'autre lorsque l'accoudoir est monté sur le siège et est en position relevée.

Ainsi, d'une part l'accoudoir présente une faible épaisseur lorsqu'il est relevé, de sorte qu'il peut s'intégrer parfaitement dans l'épaisseur de la matelassure du dossier du siège, et d'autre part il a une épaisseur plus grande lorsqu'il est rabattu, de sorte qu'il peut fournir un appui à une hauteur confortable pour le coude d'un passager du véhicule, tout en s'appuyant lui-même sur l'assise du siège, ce qui évite un montage en console.

Dans des modes de réalisation préférés de l'accoudoir selon l'invention, on a recours en outre à l'une et/ou à l'autre des dispositions suivantes :
- les axes de rotation sont montés sur deux flasques verticaux qui sont disposés de part et d'autre dudit accoudoir, ces deux flasques étant adaptés pour être montés dans une position fixe par rapport au siège ;
- le premier bras comporte une face dite supérieure, qui est dirigée vers le haut lorsque l'accoudoir est en position rabattue, et un logement qui débouche par une ouverture dans cette face supérieure, ce logement et son ouverture étant conformés pour recevoir par emboîtement le deuxième bras, au moins lorsque l'accoudoir est en position relevée;
- le deuxième bras ne sort pas complètement du logement lorsque l'accoudoir est en position rabattue, et ledit deuxième bras occupe alors sensiblement toute l'ouverture par laquelle débouche le logement ;
- la face supérieure du premier bras comporte un rebord qui s'étend vers l'arrière à partir de l'extrémité avant dudit premier bras, l'ouverture de la face supérieure du premier bras s'étendant depuis ce rebord jusqu'à l'extrémité arrière dudit premier bras, et l'extrémité avant du deuxième bras s'engageant sous ledit rebord au moins lorsque l'accoudoir est en position rabattue;
- le rebord comporte au moins un accessoire choisi dans le groupe comprenant les boutons de commande de réglages électriques et les supports de gobelet;
- le rebord comporte au moins un orifice qui communique avec le logement du premier bras et qui est adapté pour recevoir un gobelet par emboîtement afin de supporter ce gobelet lorsque l'accoudoir est en position rabattue, l'extrémité avant du deuxième bras étant alors située à l'arrière de l'orifice pour permettre l'engagement du gobelet dans cet orifice;
- le deuxième bras comporte une face dite supérieure, qui est dirigée vers le haut lorsque l'accoudoir est en position rabattue, ce deuxième bras délimitant intérieurement une cavité de rangement qui débouche dans ladite face supérieure du deuxième bras et qui est recouverte par un couvercle pivotant tourillonnant à l'extrémité arrière du deuxième bras, ce couvercle étant engagé sous le rebord susmentionné du premier bras lorsque l'accoudoir est en position relevée, et ledit couvercle étant dégagé de ce rebord lorsque l'accoudoir est en position rabattue ;
- le couvercle tourillonne autour de l'axe de pivotement du deuxième bras.

Par ailleurs, l'invention a également pour objet un dispositif d'assise comportant un accoudoir tel que défini ci-dessus, monté sur un siège de véhicule qui présente une assise et un dossier, l'accoudoir étant intégré dans le dossier et constituant une partie dudit dossier lorsqu'il est dans sa position relevée, et l'accoudoir étant disposé sensiblement horizontalement en appui sur l'assise lorsqu'il est dans sa position rabattue.

D'autres caractéristiques et avantages de l'invention apparaîtront au cours de la description suivante d'une de ses formes de réalisation, donnée à titre d'exemple non limitatif, en regard des dessins joints.

Sur les dessins :
- la figure 1 est une vue schématique en coupe verticale partielle d'un siège selon un mode de réalisation de l'invention, avec son accoudoir rabattu,
- la figure 2 est une vue schématique du mécanisme de rehausse de l'accoudoir de la figure 1, en position rabattue et en position relevée,
- la figure 3 est une vue similaire à la figure 1, lorsque l'accoudoir est en position relevée,
- et la figure 4 est une vue en perspective partiellement écorchée de l'accoudoir de la figure 1, en position rabattue.

Sur les différentes figures, les mêmes références désignent des éléments identiques ou similaires.

Le siège de véhicule représenté sur les figures est un siège arrière de véhicule automobile, comportant une assise 1, un dossier 2 et un accoudoir central 3. Cet accoudoir est monté pivotant entre d'une part une position relevée où il s'intègre dans le dossier en constituant une partie dudit dossier, et d'autre part une position rabattue où il est disposé sensiblement horizontalement en s'appuyant sur l'assise.

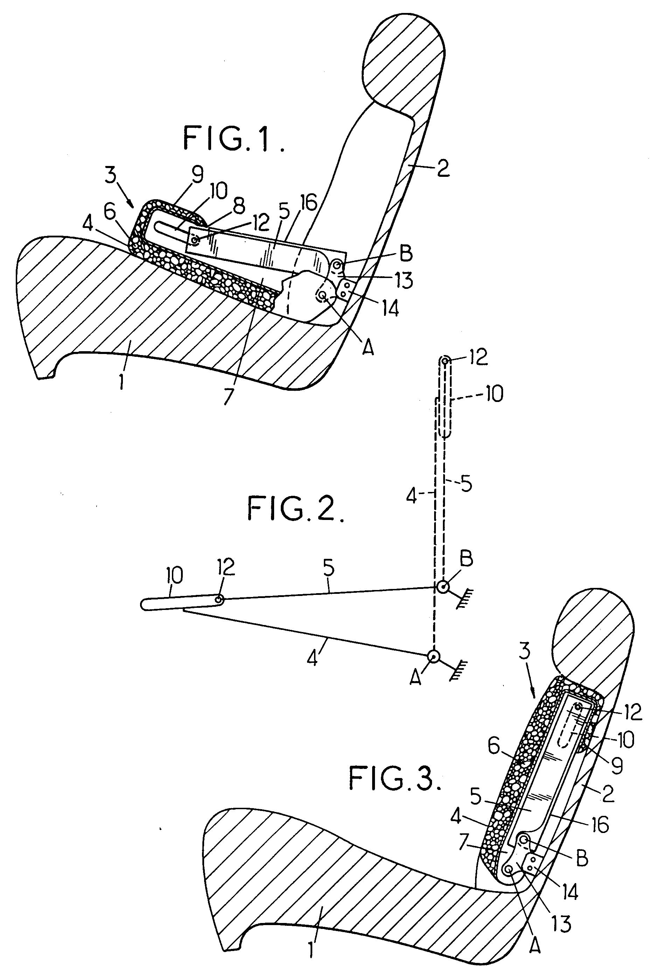

L'accoudoir 3 est constitué par deux bras articulés 4, 5 reliés entre eux par un mécanisme de rehausse qui est commandé par le pivotement de l'accoudoir, pour écarter les deux bras l'un de l'autre en rehaussant l'extrémité arrière 5a du deuxième bras par rapport au premier bras 4 lorsque l'accoudoir est en position rabattue (position représentée en trait plein sur la figure 2), et pour rapprocher les deux bras l'un de l'autre lorsque l'accoudoir est en position relevée (position représentée en pointillés sur la figure 2).

Ce mécanisme de réhausse comporte essentiellement d'une part deux axes de pivotement horizontaux A, B sensiblement superposés, qui sont fixes par rapport au siège et autour desquels pivotent les extrémités arrières 4a, 5a des deux bras, et d'autre part une liaison coulissante 10, 12 vers les extrémités avant 4b, 5b des deux bras.

Les bras 4 et 5 de l'accoudoir comportent chacun une armature rigide qui peut être réalisée par exemple en matière plastique moulée, et qui peut être recouverte au moins partiellement d'une matelassure 6. Dans tous les cas, la matelassure 6 sera prévue au moins sur la face du premier bras 4 qui est disposée vers le bas lorsque l'accoudoir est en position rabattue et qui est disposée vers l'avant en formant une partie du dossier 2 en position relevée (voir figures 1 et 3).

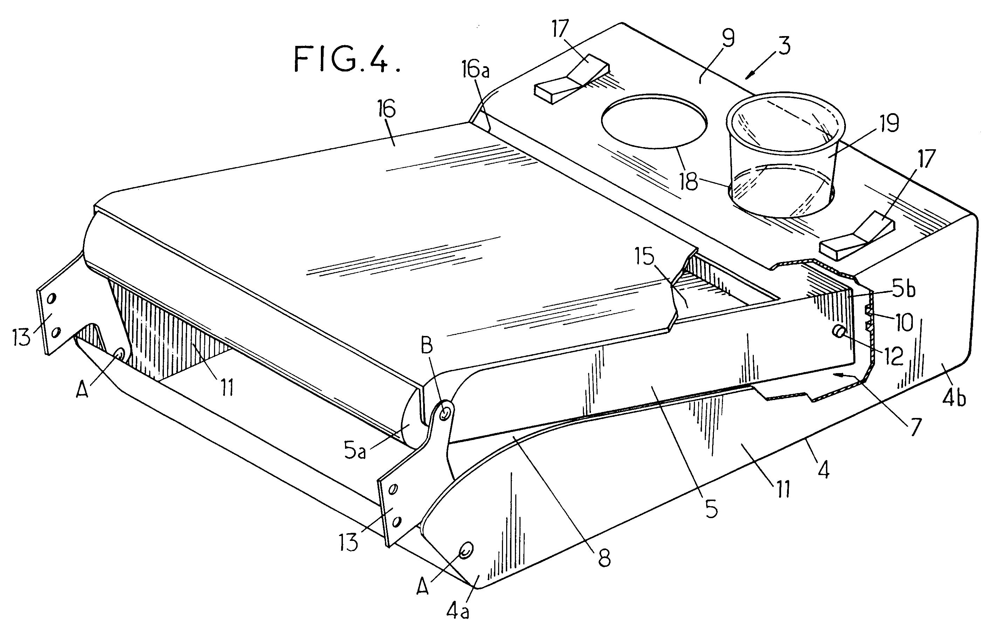

Comme représenté en détail sur la figure 4, où la matelassure 6 n'a pas été représentée pour plus de clarté, le premier bras 4 est creux et reçoit le deuxième bras 5 par emboîtement lorsque l'accoudoir est en position relevée.

Pour cela, le premier bras 4 comporte un logement intérieur 7 qui débouche par une ouverture 8 dans sa face dite supérieure, qui est dirigée vers le haut lorsque l'accoudoir est rabattu. Cette ouverture 8 s'étend depuis l'extrémité arrière 4a du premier bras vers l'avant, jusqu'à un rebord solide 9 qui forme la face supérieure de l'accoudoir au voisinage de l'extrémité avant 4b.

A l'intérieur du logement 7, le premier bras 4 comporte deux glissières 10 qui sont solidaires respectivement des deux parois latérales 11 dudit premier bras. Les glissières 10 sont disposées parallèlement à la direction longitudinale du premier bras vers l'extrémité avant 4b de ce bras, et chacune des glissières 10 reçoit un pivot 12 coulissant qui est solidaire de l'extrémité avant 5b du deuxième bras 5.

Ainsi, lorsque l'accoudoir est en position rabattue, comme représenté sur les figures 1 et 4 et comme schématisé en trait plein sur la figure 2, l'extrémité arrière 5a du premier bras fait saillie au-dessus de l'ouverture 8 du deuxième bras tandis que l'extrémité avant 5b du premier bras est située à l'intérieur du logement 7 du premier bras. Dans cette position, le deuxième bras 5 occupe avantageusement sensiblement toute l'ouverture 8 de la face supérieure du premier bras 4. De plus, la face inférieure du premier bras 4 est alors en appui contre l'assise 1 du siège.

Lorsqu'on relève l'accoudoir, les deux bras 4 et 5 de l'accoudoir se placent sensiblement dans une position verticale, c'est-à-dire sensiblement parallèlement à la direction d'alignement des axes A et B, de sorte que d'une part, l'extrémité arrière 5a du deuxième bras pénètre entièrement à l'intérieur du logement 7 en passant à travers l'ouverture 8, et d'autre part, l'extrémité avant 5b du deuxième bras coulisse sous le rebord 9 vers l'extrémité avant 4b du premier bras, en étant guidée par le coulissement des pivots 12 dans les glissières 10.

Avantageusement, afin de faciliter le montage de l'accoudoir 3 sur le siège, il est avantageux que les extrémités arrières 4a, 5a des deux bras de l'accoudoir soient réunies, avant le montage de l'accoudoir sur le siège, au moyen de flasques verticaux métalliques 13 sur lesquels tourillonnent les deux bras 4 et 5 respectivement autour des axes A et B. Ainsi, pour monter l'accoudoir 3 sur le siège, il suffit de fixer les deux flasques 13 sur des parties adaptées de l'armature du dossier 2 du siège, telles que des pattes 14 (figures 1 et 3).

De préférence, le deuxième bras 5 de l'accoudoir délimite intérieurement une cavité de rangement 15. Cette cavité de rangement est ouverte vers le haut et recouverte par un couvercle pivotant 16 qui tourillonne autour de l'axe B susmentionné.

L'extrémité avant 16a du couvercle est dégagée lorsque l'accoudoir 3 est en position rabattue, de façon à permettre le pivotement du couvercle 16, et cette extrémité avant 16a est de préférence engagée sous le rebord 9 lorsqu'on relève l'accoudoir 3, de façon à éviter alors une ouverture intempestive même partielle du couvercle.

Eventuellement, comme représenté sur la figure 4, le rebord 9 du premier bras 4 peut comporter divers accessoires, tels que des boutons de commande 17 reliés à un système de réglage électrique du siège pour commander ce système, où des supports 18 de gobelets qui peuvent simplement consister en des évidements ménagés dans le rebord 9. Ces évidements 18 sont alors de préférence disposés au-dessus d'une partie du logement 7 qui est libérée par l'extrémité avant 5b du deuxième bras lorsque l'accoudoir est en position rabattue, de façon à permettre la pénétration de la partie inférieure des gobelets 19 à l'intérieur dudit logement 7, à travers les orifices 18.

## Revendications

1. Accoudoir (3) destiné à être monté pivotant sur un siège de véhicule entre une position relevée et une position rabattue, cet accoudoir comportant un premier bras (4) qui s'étend entre, d'une part, une extrémité arrière (4a) comportant un axe de rotation horizontal (A) adapté pour être monté dans une position fixe par rapport au siège, et d'autre part, une extrémité avant (4b),
**caractérisé en ce qu**'il comporte en outre un deuxième bras (5) qui s'étend entre une extrémité arrière (5a) et une extrémité avant (5b), l'extrémité arrière (5a) du deuxième bras comportant un axe de rotation horizontal (B) qui est parallèle à l'axe de rotation (A) du premier bras et qui est adapté pour être monté dans une position fixe par rapport au siège, les deux axes de rotation (A, B) étant disposés sensiblement l'un au-dessus de l'autre, et les deux bras étant reliés l'un à l'autre par une liaison coulissante (10, 12) vers leurs extrémités avant (4b, 5b) pour permettre un déplacement longitudinal relatif entre les deux bras lors du pivotement de l'accoudoir, les deux axes de rotation (A, B) et la liaison coulissante (10, 12) constituant un mécanisme de rehausse (A, B, 10, 12) qui est commandé par le pivotement de l'accoudoir lorsque cet accoudoir est monté sur le siège, ce mécanisme de rehausse étant adapté pour écarter les deux bras (4, 5) l'un de l'autre en rehaussant l'extrémité arrière (5a) du deuxième bras par rapport au premier bras lorsque l'accoudoir est monté sur le siège et est en position rabattue, et pour rapprocher les deux bras (4, 5) l'un de l'autre lorsque l'accoudoir est monté sur le siège et est en position relevée.

2. Accoudoir selon la revendication 1, dans lequel les axes de rotation (A, B) sont montés sur deux flasques verticaux (13) qui sont disposés de part et d'autre dudit accoudoir, ces deux flasques étant adaptés pour être montés dans une position fixe par rapport au siège.

3. Accoudoir selon l'une quelconque des revendications 1 et 2, dans lequel le premier bras (4) comporte une face dite supérieure, qui est dirigée vers le haut lorsque l'accoudoir est en position rabattue, et un logement (7) qui débouche par une ouverture (8) dans cette face supérieure, ce logement et son ouverture étant conformés pour recevoir par emboîtement le deuxième bras (5), au moins lorsque l'accoudoir est en position relevée.

4. Accoudoir selon la revendication 3, dans lequel le deuxième bras (5) ne sort pas complètement du logement (7) lorsque l'accoudoir est en position rabattue, et ledit deuxième bras occupe alors sensiblement toute l'ouverture (8) par laquelle débouche le logement.

5. Accoudoir selon la revendication 4, dans lequel la face supérieure du premier bras (4) comporte un rebord (9) qui s'étend vers l'arrière à partir de l'extrémité avant (4b) dudit premier bras, l'ouverture (8) de la face supérieure du premier bras s'étendant depuis ce rebord jusqu'à l'extrémité arrière dudit premier bras, et l'extrémité avant (5b) du deuxième bras s'engageant sous ledit rebord (9) au moins lorsque l'accoudoir est en position rabattue.

6. Accoudoir selon la revendication 5, dans lequel le rebord (9) comporte au moins un accessoire choisi dans le groupe comprenant les boutons de commande (17) de réglages électriques et les supports (18) de gobelet.

7. Accoudoir selon la revendication 6, dans lequel le rebord (9) comporte au moins un orifice (18) qui communique avec le logement (7) du premier bras et qui est adapté pour recevoir un gobelet (19) par emboîtement afin de supporter ce gobelet lorsque l'accoudoir est en position rabattue, l'extrémité avant (5b) du deuxième bras étant alors située à l'arrière de l'orifice (18) pour permettre l'engagement du gobelet dans cet orifice.

8. Accoudoir selon l'une quelconque des revendications 5 à 7, dans lequel le deuxième bras (5) comporte une face dite supérieure, qui est dirigée vers le haut lorsque l'accoudoir est en position rabattue, ce deuxième bras délimitant intérieurement une cavité de rangement (15) qui débouche dans ladite face supérieure du deuxième bras et qui est recouverte par un couvercle pivotant (16) tourillonnant à l'extrémité arrière du deuxième bras, ce couvercle étant engagé sous le rebord (9) susmentionné du premier bras lorsque l'accoudoir est en position relevée, et ledit couvercle étant dégagé de ce rebord (9) lorsque l'accoudoir est en position rabattue.

9. Accoudoir selon la revendication 8, dans lequel le couvercle (16) tourillonne autour de l'axe de pivotement (B) du deuxième bras (5).

10. Dispositif d'assise comportant un accoudoir (3) selon l'une quelconque des revendications précédentes, monté sur un siège de véhicule qui présente une assise (1) et un dossier (2), l'accoudoir étant intégré dans le dossier (2) et constituant une partie dudit dossier lorsqu'il est dans sa position relevée, et l'accoudoir étant disposé sensiblement horizontalement en appui sur l'assise (1) lorsqu'il est dans sa position rabattue.

## Claims

1. Armrest (3) designed to be mounted to tilt on a vehicle seat between a raised position and a folded-down position, this armrest having a first arm (4) which extends between, on the one hand, a rear end (4a) having a horizontal swivel pin (A) adapted so as to be mounted in a fixed position relative to the seat and, on the other hand, a front end (4b),
**characterized in that** it additionally has a second arm (5) which extends between a rear end (5a) and a front end (5b), the rear end (5a) of the second arm having a horizontal swivel pin (B) which is parallel to the swivel pin (A) of the first arm and which is adapted so as to be mounted in a fixed position in relation to the seat, the two swivel pins (A, B) being arranged substantially one behind the other, and the two arms being connected to each other by a sliding connector (10, 12) towards their front ends (4b, 5b) so as to permit a relative longitudinal movement between the two arms when the armrest is pivoted, the two swivel pins (A, B) and the sliding connector (10, 12) constituting a raising mechanism (A, B, 10, 12) which is controlled by tilting the armrest when this armrest is mounted on the seat, this raising mechanism being adapted so as to separate the two arms (4, 5) from each other by raising the rear end (5a) of the second arm relative to the first arm when the armrest is mounted on the seat and is in a folded-down position, and to bring the two arms (4, 5) towards each other when the armrest is mounted on the seat and is in the raised position.

2. Armrest according to claim 1, wherein the swivel pins (A, B) are mounted on two vertical flanges (13) which are arranged either side of the said armrest, these two flanges being adapted so as to be mounted in a fixed position relative to the seat.

3. Armrest according to either of claims 1 or 2, wherein the first arm (4) has a so-called upper face which is directed upwards when the armrest is in the folded-down position, and a housing (7) which emerges in an opening (8) in this upper face, this housing and its opening being arranged so as to receive, by insertion, the second arm (5), at least when the armrest is in the raised position.

4. Armrest according to claim 3, wherein the second arm (5) does not completely leave the housing (7) when the armrest is in the folded-down position, and the said second arm then occupies substantially all the opening (8) through which the housing emerges.

5. Armrest according to claim 4, wherein the upper face of the first arm (4) has an edge (9) which extends rearwards from the front end (4b) of the said first arm, the opening (8) of the upper face of the first arm extending from this edge to the rear end of the said first arm, and the front end (5b) of the second arm engaging under the said edge (9) at least when the armrest is in the folded-down position.

6. Armrest according to claim 5, wherein the edge (9) has at least one accessory chosen from the group comprising electrical adjustment control buttons (17) and cup holders (18).

7. Armrest according to claim 6, wherein the edge (9) includes at least one orifice (18) which communicates with the housing (7) of the first arm and which is adapted to receive a cup (19) by insertion so as to support this cup when the armrest is in the folded-down position, the front end (5b) of the second arm then being situated behind the orifice (18) so as to enable the cup to be engaged in this orifice.

8. Armrest according to any one of claims 5 to 7, wherein the second arm (5) has a so-called upper face which is directed upwards when the armrest is in the folded-down position, this second arm delimiting internally a storage cavity (15) which opens out in the said upper face of the second arm and which is covered by a pivoting lid (16) swivelling at the end of the second arm, this lid being engaged under the aforementioned edge (9) of the first arm when the armrest is in the raised position, and the said lid being disengaged from this edge (9) when the armrest is in the folded-down position.

9. Armrest according to claim 8, wherein the lid (16) swivels about the swivel pin (B) of the second arm (5).

10. Seating device having an armrest (3) according to any one of the preceding claims, mounted on a vehicle seat which has a base (1) and a back-rest (2), the armrest being incorporated in the back-rest (2) and constituting a so-called back-rest part when it is in its raised position, and the armrest being arranged substantially horizontally resting on the base (1) when it is in its folded-down position.

## Patentansprüche

1. Armlehne (3), die auf einem Fahrzeugsitz zwischen einer hochgeklappten und einer heruntergeklappten Position verschwenkbar befestigt ist, mit einem ersten Arm (4), der sich zwischen einem hinteren Ende (4a) mit einer horizontalen Rotationsachse (A), die dazu geeignet ist, in einer bezüglich dem Sitz starren Position befestigt zu werden, und einem vorderen Ende (4b) erstreckt,
dadurch gekennzeichnet, daß sie darüber hinaus einen zweiten Arm (5) aufweist, der sich zwischen einem hinteren Ende (5a) und einem vorderen Ende (5b) erstreckt, wobei das hintere Ende (5a) des zweiten Arms eine horizontale Rotationsachse (B) aufweist, die parallel zur Rotationsachse (A) des ersten Arms verläuft und dazu geeignet ist, in einer bezüglich dem Sitz starren Position befestigt zu werden, wobei die beiden Rotationsachsen (A, B) im wesentlichen übereinander angeordnet sind und die beiden Arme durch eine Kulisse-Zapfen-Verbindung (10, 12) im Bereich ihrer vorderen Enden (4b, 5b) miteinander verbunden sind, um beim Verschwenken der Armlehne eine Längsverschiebung der beiden Armen zueinander zu gestatten, wobei die beiden Rotationsachsen (A, B) und die Kulisse-Zapfen-Verbindung (10, 12) einen Hebemechanismus (A, B, 10, 12) bilden, der durch das Verschwenken der Armlehne gesteuert wird, wenn die Armlehne am Sitz befestigt ist, wobei dieser Hebemechanismus dazu geeignet ist, die beiden Arme (4, 5) voneinander zu entfernen, indem das hintere Ende (5a) des zweiten Arms bezüglich des ersten Arms angehoben ist, wenn die Armlehne am Sitz befestigt und in heruntergeklappter Position ist, und dazu, die beiden Arme (4, 5) einander anzunähern, wenn die Armlehne am Sitz befestigt und in hochgeklappter Position ist.

2. Armlehne nach Anspruch 1, bei der die Rotationsachsen (A, B) an zwei vertikalen Flanschen (13) befestigt sind, die auf beiden Seiten der Armlehne angeordnet und dazu geeignet sind, in einer bezüglich dem Sitz starren Position befestigt zu werden.

3. Armlehne nach einem der Ansprüche 1 und 2, bei der der erste Arm (4) eine sogenannte obere Fläche, die nach oben gerichtet ist, wenn die Armlehne in heruntergeklappter Position ist, und eine Aufnahme (7) aufweist, die über eine Öffnung (8) in diese obere Fläche mündet, wobei die Aufnahme und ihre Öffnung so ausgebildet sind, daß der zweite Arm (5), zumindest, wenn die Armlehne in hochgeklappter Position ist, in sie eingeschoben werden kann.

4. Armlehne nach Anspruch 3, bei der der zweite Arm (5) die Aufnahme (7) nicht vollständig verläßt, wenn die Armlehne in heruntergeklappter Position ist, und der zweite Arm dann im wesentlichen die gesamte Öffnung (8), die in die Aufnahme führt, besetzt.

5. Armlehne nach Anspruch 4, bei der die obere Fläche des ersten Arms (4) eine Einfassung (9) aufweist, die sich vom vorderen Ende (4b) des ersten Arms aus nach hinten erstreckt, wobei sich die Öffnung (8) der oberen Fläche des ersten Arms von dieser Einfassung aus bis zum hinteren Ende des ersten Arms erstreckt und sich das vordere Ende (5b) des zweiten Arms, zumindest, wenn die Armlehne in heruntergeklappter Position ist, unter diese Einfassung (9) einfügt.

6. Armlehne nach Anspruch 5, bei der die Einfassung (9) mindestens einen Bedienungsschalter (17) elektrischer Steuerungen und Becherhalter (18) aufweist.

7. Armlehne nach Anspruch 6, bei der die Einfassung (9) mindestens eine Öffnung (18) aufweist, die mit der Aufnahme (7) des ersten Arms in Verbindung steht und dazu geeignet ist, einen Becher (19) aufzunehmen und zu halten, wenn die Armlehne in heruntergeklappter Position ist, wobei sich das vordere Ende (5b) des zweiten Arms dann hinter der Öffnung (18) befindet, damit der Becher in die Öffnung eingefügt werden kann.

8. Armlehne nach einem der Ansprüche 5 bis 7, bei der der zweite Arm (5) eine sogenannte obere Fläche aufweist, die nach oben gerichtet ist, wenn die Armlehne in heruntergeklappter Position ist, wobei dieser zweite Arm innen ein Ablagefach (15) abgrenzt, das in die obere Fläche des zweiten Arms mündet und von einem Klappdeckel (16) überdeckt ist, der am hinteren Ende des zweiten Arms drehbar gelagert ist, wobei der Deckel unter der zuvor erwähnten Einfassung (9) des ersten Arms eingefügt ist, wenn die Armlehne in hochgeklappter Position ist, und nicht unter dieser Einfassung (9) eingefügt ist, wenn die Armlehne in heruntergeklappter Position ist.

9. Armlehne nach Anspruch 8, bei der der Deckel (16) um die Schwenkachse (B) des zweiten Arms (5) drehbar gelagert ist.

10. Sitzkissenvorrichtung mit einer Armlehne (3) nach einem der vorhergehenden Ansprüche, die an einem Fahrzeugsitz befestigt ist, der ein Sitzkissen (1) und eine Rückenlehne (2) aufweist, wobei die Armlehne, wenn sie in ihrer hochgeklappten Position ist, in die Rückenlehne (2) eingefügt ist und einen Teil derselben bildet und in ihrer heruntergeklappten Position im wesentlichen in horizontaler Auflage auf dem Sitzkissen (1) angeordnet ist.
